# EUROPEAN PATENT SPECIFICATION

(11) **EP 1 438 492 B1**
(45) Date of publication and mention of the grant of the patent: **25.07.2007**
(21) Application number: 02777452.0
(22) Date of filing: 25.10.2002
(51) Int. Cl.: F01N 3/28, F01N 3/20, F01N 3/029, F01N 3/08

(54) **GAS TREATMENT APPARATUS**
VORRICHTUNG ZUR BEHANDLUNG VON ABGASEN
APPAREIL DE TRAITEMENT DE GAZ

(30) Priority: 25.10.2001 GB 0125568
(43) Date of publication of application: 21.07.2004
(73) Proprietor: Eminox Limited, Gainsborough, Lincolnshire DN21 2TU (GB)
(72) Inventor: BALL, William, Frederick, Nettleham Lincoln LN2 2QA (GB); GAULT, Anthony, John, Gainsborough Lincolnshire DN21 2TR (GB); HARROD, Charles, Patrick, Saxilby Lincolnshire LN1 2HH (GB)
(74) Representative: McLean, Robert Andreas
(86) International application number: PCT/GB2002/004894
(87) International publication number: WO 2003/036056

(56) References cited:
- EP-A- 0 555 746
- WO-A-01/12301
- WO-A-01/42630
- WO-A-93/00990
- ANONYMOUS: "Selective Catalytic Reduction" DIESELNET TECHNOLOGY GUIDE, XX, XX, August 2000 (2000-08), pages 1-12, XP002163384
- PATENT ABSTRACTS OF JAPAN vol. 1999, no. 11, 30 September 1999 (1999-09-30) & JP 11 166410 A (HINO MOTORS LTD), 22 June 1999 (1999-06-22)
- PATENT ABSTRACTS OF JAPAN vol. 1998, no. 04, 31 March 1998 (1998-03-31) & JP 09 317443 A (SANKEI SANGYO:KK), 9 December 1997 (1997-12-09)

## Description

The present invention relates to a gas treatment apparatus for treating an exhaust gas. The invention particularly relates to a gas treatment apparatus for treating the exhaust gas from an internal combustion engine, especially an internal combustion engine in a vehicle and extends to a vehicle equipped with such a gas treatment apparatus.

Diesel engine exhaust gases contain a number of noxious gases, such a nitrogen oxides, sulphur oxides and carbon oxides, as well as un-burnt hydrocarbons, carbon and other particles. The amount of sulphur oxides in the exhaust gases is dependent primarily upon the sulphur in the fuel and is controlled by the quality of the initial crude oil and the refining techniques used in the preparation of the fuel. However, the other materials can be treated so as to render them less obnoxious.

It is therefore common practice to pass the exhaust gases through one or more treatment chambers containing a treatment element such as a catalytic converter in which the lower nitrogen oxides are converted to NO₂. The particulates are removed from the exhaust gas stream by a metal gauze or mesh or a ceramic filter element. The NO₂ and oxygen in the gas stream react with the carbon particulates trapped in the filter element to form carbon dioxide, which is then discharged with the other exhaust gases. The filtered gases can then be subjected to reduction of remaining nitrogen oxides to nitrogen by injecting a reducing agent such as a solution of urea in water into the gas stream after it leaves the filter element but before it leaves the silencer unit. The treated gas stream is then passed over a further catalyst to convert residual ammonia from the urea to nitrogen and water, which are acceptable exhaust emissions. The net result is a typical reduction in noxious components of the exhaust gases of over 90%.

Due to space limitations for the location of such gas treatment apparatus, it is desirable to reduce their overall outer dimensions so that the designer has a greater choice in selecting where they can be mounted on or in other equipment. For the catalysts to function efficiently the reducing agent should be well mixed with the gas flow. Traditionally, the reducing agent is added via an injector nozzle having a number of radially directed outlets. This leads to imperfect distribution of the reducing agent across the gas flow.

It is known from the International Application PCT/GB00/02342 to include mixing vanes upstream of the injection of the reducing agent, in this case urea. These mixing vanes cause the gas flow to rotate or swirl rapidly in one direction around the direction of travel of the gas so that as the reducing agent is injected it is mixed with the gas flow. The introduction of mixer vanes allows the distance between the point of injection and a downstream treatment element to be reduced whilst retaining acceptable mixing thus reducing the overall size of the apparatus.

It is also known from WO 01/42630A a gas treatment apparatus for treating an exhaust gas stream.

The gas flow downstream of the point of injection is still rapidly swirling as it enters a treatment element. We have found that the introduction of such a rapidly rotating flow into a treatment element can result in an increased pressure drop across the treatment element, particularly at the entry to the treatment element.

It is an object of the present invention to address some of the issues mentioned above.

Accordingly, the invention provides treatment apparatus for treating an exhaust gas stream, said apparatus comprising a plurality of compartments containing treatment elements within which one or more treatments are to be performed on a gas stream passing through said compartments and through which the gas stream is to flow sequentially, including and in order:
a) a compartment containing a first treatment element;
b) a mixing region including addition means for adding a reducing agent to the gas stream, the mixing region also including turbulence inducing means to induce turbulence within the gas stream; and
c) at least one further compartment containing a treatment element for a catalytic treatment;
characterised in that the turbulence inducing means within the mixing region include angled surfaces that cause at least some of the gas to flow circumferentially in one direction and at least some of the gas to flow circumferentially in an opposite direction.

By causing at least some of the gas to flow circumferentially in one direction and at least some of the gas to flow circumferentially in an opposite direction the contra rotating gas flows will, in effect, collide and reduce the overall rotational component, or swirl, of the gas flow. The collision between the gas flowing in opposite directions will increase the turbulence of the gas and this may promote rapid mixing in the mixing region. It should be understood that the gas flow will still move through the mixing region, but will have a component of its motion in the circumferential direction.

The angled surfaces may be at any suitable angle to the overall gas flow to cause the gas impinging upon the surfaces to flow circumferentially, but the surfaces are preferably angled between 10° and 80° to the gas flow direction and more preferably between 25° and 65° to the gas flow direction. The gas flow direction is taken to be the overall gas flow direction, through the apparatus, and does not include local deviations such as eddies.

It is preferred that the gas leaving the mixing region has substantially no swirl, but in some cases it may be desirable that the counteraction of the induced swirl is not complete and that some swirl remains. However, it is preferred that the swirl is reduced to less than about 30% of the level induced and preferably less than about 10%.

The term "swirl" is used herein to describe an overall rotational component of the gas flow about an axis substantially parallel with the direction of travel of the gas. Swirl may therefore have one of two directions, clockwise or anticlockwise about said axis.

It should be noted that turbulence, which may include rotational components such as a vortex or eddy is excluded from the term 'swirl', as the rotational component is not a feature of the overall gas flow, but is a localised rotation within the gas flow. In general, turbulence in a gas flow creates randomly distributed vortices and/or eddies that when averaged over the cross section of the gas flow result in little or no overall rotational characteristic.

It should be understood that the term substantially no swirl as used herein is used to include those cases in which the gas leaving the mixing region still includes a swirl component, but does not cause a substantial increase in pressure drop as it enters a downstream treatment element when compared with a non-swirling gas flow. Defining an 'acceptable level' of swirl depends upon many different parameters, such as the size of the apparatus, speed of gas flow, nature of the treatment elements etc. and an acceptable level of swirl can be found by those skilled in the art by trial and error.

The turbulence inducing means preferably comprises at least one baffle, but may comprise blades similar to those of a turbine or fan which direct the gas flow in a circumferential direction. A baffle restricts or redirects the gas flow by placing obstructions in the path of the gas that the gas must flow around. The baffle may include apertures such that gas may pass through the baffle.

The or each baffle includes angled surfaces that may direct at least some of the gas to flow circumferentially in one direction and at least some of the gas to flow circumferentially in an opposite direction. There may be more than one baffle in the mixing region and a first baffle may direct at least some of the gas to flow circumferentially in one direction, imparting swirl to the gas flow, while a second baffle may direct at least some of the gas to flow circumferentially in an opposite direction, reducing the swirl of the gas. It is preferred that there is a single baffle as this reduces the component count for the apparatus.

The baffle may include projections or flanges raised from a surface of the baffle near the edge of the apertures. These projections may be formed integrally with the baffle by stamping, pressing or other forming process, or may be added before or after the apertures are formed by welding, soldering or other suitable process. The projections are preferably on the downstream side of the baffle.

The projections may form the angled surfaces and may form a louver for directing the gas and hence may direct the gas flow in a circumferential direction which may impart swirl if all the louvers direct the gas flow in the same circumferential direction. If this is the case, the mixing region will include further turbulence inducing means that cause at least some of the gas to flow circumferentially in an opposite direction, reducing the swirl.

The gas treatment apparatus according to the invention may be suitable for the treatment of any exhaust gas stream, for instance an industrial flue gas stream or the exhaust gas stream from a chemical process, but the invention is particularly intended for use in the treatment of an exhaust gas stream from an internal combustion engine and is of especial relevance to a vehicle having an internal combustion engine. In such vehicles space limitations are important design considerations for the location of such gas treatment apparatus.

It is preferred that the first treatment element is a treatment element for catalytic oxidation, but may be a filter or other treatment element.

For convenience the invention will be described with reference to a preferred embodiment of a generally concentrically arranged gas treatment apparatus for treating the exhaust gas flow from an internal combustion engine. The apparatus having a central compartment within which treatment elements are located for performing an oxidation treatment and a subsequent filtration treatment upon the gas stream. Downstream of the filtration treatment element is a mixing region including addition means for the addition of a reducing agent to the gas stream and turbulence inducing means to induce turbulence in the gas stream to encourage mixing of the gas stream and reducing agent. Downstream of the mixing region is an annular compartment substantially surrounding the central compartment. Within the annular compartment are located annular treatment elements for catalytic oxidation of the gas stream and the removal of any remaining reducing agent.

The catalytic treatment element within the central compartment may preferably be a Pt containing catalyst having for instance 350 - 5300g Pt per m³ of catalytic treatment element. The catalyst is preferably deposited on a ceramic or metal through flow honeycomb support. It should be understood that other catalysts may also be suitable for this application.

The filtration treatment element is preferably a ceramic wall flow filter, but may be of any other suitable type. The filtration treatment element is for removing fine particulate matter from the gas flow. Preferably the filtration treatment element can remove particles down to about one tenth of a micrometre and is located downstream of the oxidation catalyst within the central compartment.

The catalytic treatment elements located downstream of the mixing region is preferably a catalyst suitable for Selective Catalytic Reduction (SCR) to reduce nitrogen oxides within the gas stream. Preferably this catalytic treatment element includes a Copper based or Vanadium based catalyst. This catalyst will preferably be supported on a metallic or ceramic honeycomb through flow support. It should be understood that other catalysts may also be suitable for this application.

The annular compartment preferably includes a treatment element downstream of the SCR treatment element for the decomposition of any remaining reducing agent to a less noxious compound. Such catalysts are generally available to those in the art. For instance if the reducing agent is a solution of urea in water, the catalytic treatment element may be suitable for converting any residual Ammonia to water and Nitrogen.

The reducing agent added to the gas stream may be any suitable reducing agent, but will preferably be ammonia, hydrazine, urea, biuret, a lower alkylamine or a mixture of these. It should be understood that the reducing agent may be added anywhere within the mixing region. Preferably the reducing agent is injected upstream of the turbulence inducing means such that as the gas flow is passed through the turbulence inducing means mixing of the gas flow and the reducing agent is encouraged. The reducing agent may be gaseous when added, but will usually be added as a liquid or solution in water or other solvent. The reducing agent preferably evaporates at the temperature of the exhaust gasses such that the reducing agent becomes gaseous, as this aids mixing.

The reducing agent may be added to the gas flow by any suitable addition means, for example, sprays, jets, or spargers etc. These addition means may be stationary or they may move and/or rotate, either driven under power or caused to do so by the passing gas flow, for instance by the addition of vanes to the addition means. Such movement may help to distribute the reducing agent more evenly within the gas flow.

Preferably the reducing agent is injected as a fine spray into the gas flow from a static injector having one or more outlets. It is preferable that the velocity of the reducing agent as it leaves the outlets from the injector is sufficient for the reducing agent to reach substantially to the edge of the gas flow before reaching turbulence inducing means. This allows the reducing agent to be distributed across the entire cross section of the gas flow prior to the flow being disturbed. This may require different outlet sizes or pressures to adjust the outlet velocity depending upon the location of the outlet, the location of the injector and the size and shape of the mixing region.

The outlets from the static injector may be located at any point on the injector. For instance they may be located circumferentially and directed radially at a distal end of the injector, or may be distributed along the length of the injector and directed substantially perpendicular to the direction of gas flow. The injector may be of any shape suitable for the shape of the mixing region and the location of the injector. For example, an injector mounted in the side wall of a tube may extend radially inwards until a central axis of the tube is reached and may then be angled such that a distal portion of the injector is substantially aligned with said central axis. In this way radially directed injector outlets may be achieved from an injector mounted in a side wall of the mixing region.

The gas stream leaving the mixing region preferably contains a substantially even distribution of the reducing agent due to the induced turbulence.

The turbulence inducing means are preferably static to avoid the use of moving parts within the apparatus, but a moving turbulence inducing means, either driven or caused to move by the gas flow, may be used to encourage positive mixing of the reducing agent with the gas flow.

The gas flow leaving the mixing region then passes into a downstream SCR catalytic treatment element and is desirably substantially evenly distributed over the upstream surface of the SCR catalytic treatment element. An even gas distribution allows the catalyst to function with substantially no loss in efficiency and therefore allows the use of a smaller catalyst.

It is preferred that the turbulence inducing means within the mixing region comprises only one baffle, although more may be used. The use of only one baffle reduces the component count for the apparatus and hence reduces manufacturing costs. A single baffle may also reduce the pressure drop in the gas flow across the mixing region.

The mixing region preferably includes only one baffle which includes apertures and louvres. The louvers may be arranged such that some of the gas is directed circumferentially in one direction and that at least some of gas is directed in the opposite direction. It is preferred that the gas leaving the mixing region has substantially no swirl. A plurality of louvres may be orientated to direct the gas flows in several different, or substantially random directions such that turbulence is increased, but that at least some of the gas is caused to flow circumferentially in two opposing directions. This may result in substantially no swirl being imparted to the gas flow.

Droplets or films of reducing agent may form on any internal surface of the apparatus. Minimising such deposition of the reducing agent within the apparatus may facilitate the efficient transient operation of the apparatus such that the amount of reducing agent in the flow substantially corresponds to the amount added. Directing the gas flow circumferentially causes the gas to flow across the surface of the baffle and may enable the gas to entrain some of the reducing agent so that it is reintroduced into the flow. Directing the gas flow in a circumferential direction may also aid circumferential mixing of the gas and reducing agent which may help to reduce problems of mal-distribution of reducing agent if one of the outlets of the injection nozzle becomes blocked.

Injection of the reducing agent may result in mal-distribution of the reducing agent within the gas flow, for example a high concentration in the centre of an injected spray and low concentration near an edge of an injected spray. To avoid such mal-distribution continuing through the mixing region it is preferable that the number of apertures through the baffle at a given radius from the centre and the number of outlets from the injector do not synchronise. For example, if there are eight radially directed injector outlets, the number of apertures at a given radius on the baffle will preferably not be wholly divisible by eight. This will ensure that at least some of the spray from at least two outlets must pass through one aperture and hence facilitates mixing.

The turbulence inducing means may be removable from the apparatus for servicing, or may be welded in place if required. They may be permanently attached to a removable endcap of the treatment apparatus. Additionally, or alternatively, the turbulence inducing means may be permanently attached to the addition means for adding the reducing agent.

Gas treatment apparatus according to the invention may be made using any suitable techniques known to those in the art.

Although the apparatus has been described with reference to a preferred embodiment, it should be understood that the invention is equally applicable to gas treatment apparatus having a generally linear arrangement of compartments, having compartments separated by pipes or conduits, having additional or fewer treatment elements, or having several separate compartments within which the same treatment is applied to the gas stream and downstream of which the gas flows are combined into a single compartment. The gas flow through the concentric apparatus may also be reversed such that the gas flows through the annular compartment and then the centre compartment. The inlet and/or outlet to or from the apparatus may be axially directed rather than radially directed. Preferably the gas treatment apparatus is thermally insulated to ensure high temperatures are maintained within the apparatus. Maintaining a high temperature within the apparatus encourages the evaporation of liquids, decomposition of compounds and helps catalyst efficiency.

The invention is particularly intended for use with vehicle internal combustion engines to reduce the pollutant levels in the exhaust gas stream. Particularly for vehicles having large diesel engines such as trucks or buses.

The invention will now be further described, by way of example, with reference to the accompanying drawings, in which:
Figure 1 shows a cross section of a gas treatment apparatus according to the invention having a generally concentric arrangement;
Figure 2 shows a cross section of a gas treatment apparatus according to the invention having a generally linear arrangement;
Figure 3 shows a cross section of a gas treatment apparatus according to the invention having a twin tube arrangement;
Figure 4 shows plan I and side II views of a baffle having apertures including louvres suitable for use with the invention; and
Figure 5 shows a plan view of a baffle having apertures including louvres that direct the gas flow both radially and circumferentially.

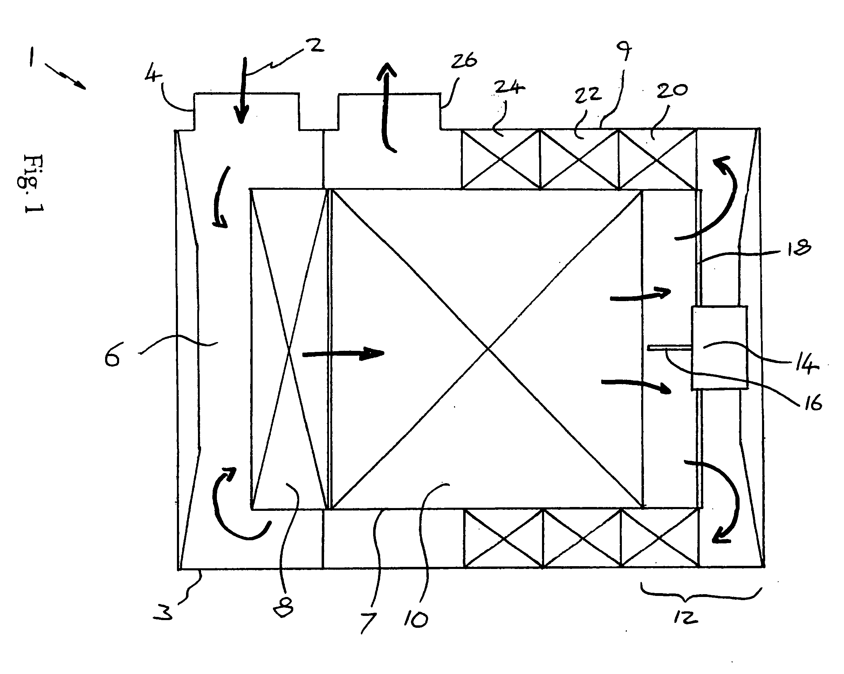

Figure 1 shows a gas treatment apparatus 1 having a generally concentric arrangement within one container 3. Arrows 2 show the flow path of the gas stream through the apparatus 1. The gas stream enters the apparatus 1 through a radial inlet 4 and passes into a chamber 6. In this case the gas stream is exhaust from a diesel internal combustion engine.

Gas from chamber 6 passes into centrally located compartment 7 containing a cylindrical oxidation catalyst 8, where components within the gas stream are oxidised. In this case the oxidation catalyst is for oxidising NOₓ compounds to NO₂.

The gas then passes into a cylindrical particulate filter 10 where fine particulate material is removed from the gas flow and subsequently oxidised. In this case the filter is a wall flow filter.

As gas leaves the filter 10, it enters a mixing region 12 within which a reducing agent, in this case urea, is mixed with the gas flow. The urea is injected through an injector 14 having a nozzle 16 with eight circumferentially spaced outlets.

The gas then passes through or around turbulence inducing means 18. In these figures the turbulence inducing means are shown for convenience as comprising only a single baffle in one location, but it should be understood that the turbulence inducing means may comprise one or more baffles located anywhere within the mixing region. In particular there may be an annular baffle formed by apertures in an extended wall of the central compartment that the gas must flow through to enter the annular compartment. The turbulence inducing means 18 create turbulence in the gas stream and thereby encourage thorough mixing of the urea with the gas stream. Some of the turbulence inducing means 18 may impart swirl to the gas flow, but this swirl will be counteracted by other turbulence inducing means 18 such that gas passing out of the mixing region 12 has substantially no swirl.

The direction of the gas flow is reversed and the gas is forced to flow into an annular compartment 9 surrounding the central compartment. This direction reversal may occur with gas that still has a swirl, and if this is the case annular turbulence inducing means would be used to reduce the swirl before the gas undergoes further treatment.

The gas then flows through annular catalytic treatment elements 20,22,24. In this case catalysts 20,22 are Selective Catalytic Reduction (SCR) catalysts and the final catalytic treatment element 24 is an ammonia clean up catalyst for removing residual ammonia from the gas flow.

The gas flow is then discharged from the apparatus 1 through an outlet 26. This discharge may be to the atmosphere, or to further treatment apparatus.

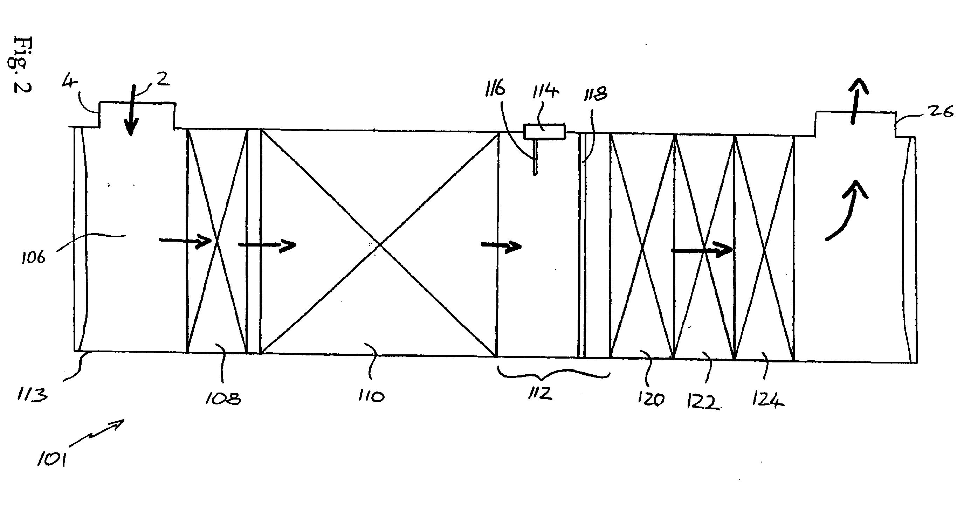

Figure 2 shows a second embodiment of gas treatment apparatus according to the invention, the apparatus being substantially linear. Features of this embodiment that are similar to those in the embodiment 1 in Figure 1 will be referenced by similar numerals incremented by 100.

Arrows 2 again show the gas flow path through the apparatus 101. The gas enters the inlet 4 and passes through the catalyst 108 and filter 110 and enters the mixing region 112.

Within the mixing region 112 urea is injected into the gas flow by wall mounted injector 114 with a nozzle 116. In this case the nozzle does not have radially directed outlets, but has an outlet directed along the axis of the nozzle towards the opposite side wall of the apparatus. It should be understood that other injectors could be used in this apparatus, for instance an injector having outlets distributed along its length creating sprays substantially perpendicular to the gas flow.

Within the mixing region 112 the gas also passes through or around turbulence inducing means 118.

The gas leaving the mixing region 112 passes into catalysts 120,122,124 before exiting the apparatus through the outlet 26.

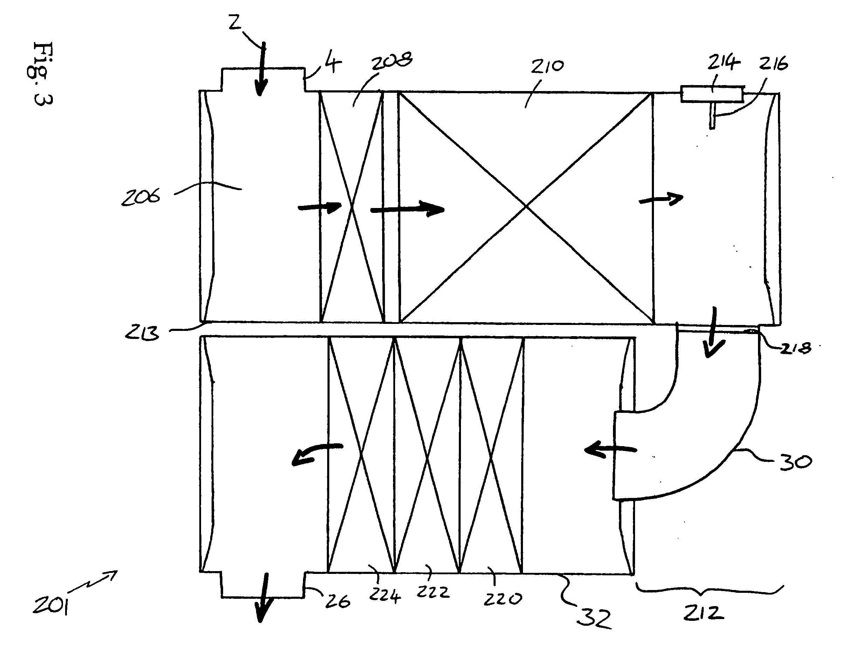

Figure 3 shows a further embodiment of gas treatment apparatus according to the invention. In this case the apparatus has a twin tube arrangement. Features of this embodiment that are similar to those of embodiment 1 of Figure 1 will be referenced by similar reference numerals incremented by 200.

Arrows 2 again show the gas flow path through the apparatus 201. The gas enters through the inlet 2 and passes through the catalyst 208 and filter 210 before entering the mixing region 212.

Urea is injected into the gas stream by an injector 214 through a nozzle 216. The nozzle 216 is similar to the nozzle 114 in embodiment 101.

The gas then flows through a curved pipe 30 to enter a second container 32 housing catalysts 220,222,224. The gas flow then exits the apparatus 201 through outlet 26.

The curved pipe 30 has a smaller diameter than the first container 213 and thus the gas flow is faster within this pipe. The turbulence inducing means 218 are located in the pipe 30 as faster gas flow encourages turbulence. As before, the gas entering the catalyst 220 has substantially no swirl. This layout of apparatus may be shallower than the previous layouts and may therefore be more suitable for a vehicle in which the depth of the gas treatment apparatus is an important design consideration.

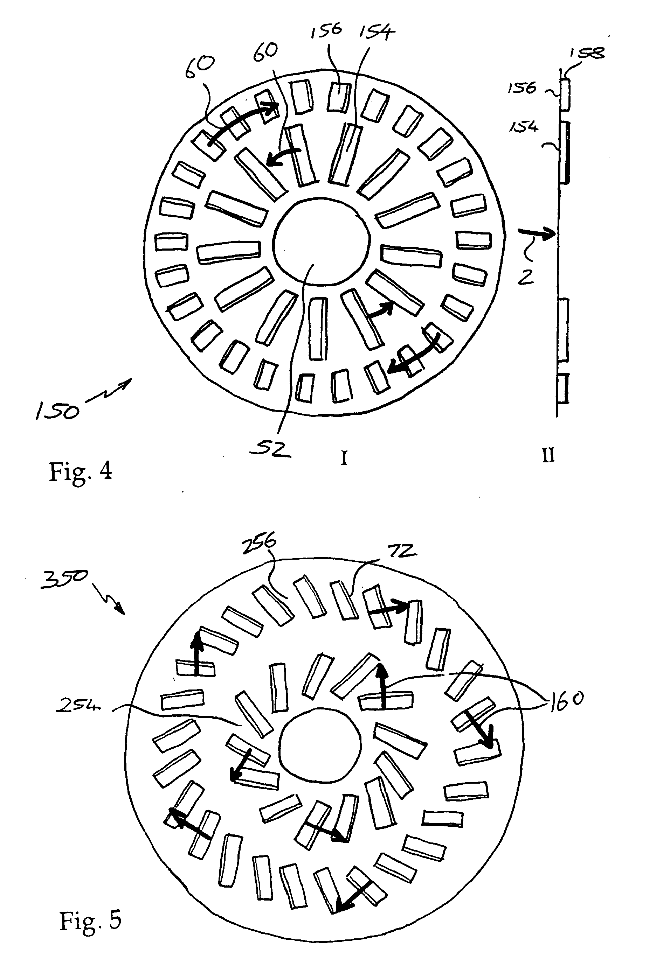

Figure 4 shows a front view I and a side view II of a baffle 150 suitable for use as turbulence inducing means within the mixing region of a gas treatment apparatus according to the invention. The baffle 150 has a central aperture 52 for permitting the injector 14 to pass through the baffle 150 and the baffle 150 is of substantially the same size and shape as a cross section of the mixing region so that substantially no gas may pass round the baffle 150.

Around the central aperture 52 there are two concentric rings of apertures 154,156. The apertures 154,156 are substantially rectangular and projections 158 form louvres on the downstream side of the baffle that direct the gas flow in the directions indicated by arrows 60. On this baffle 150, substantially half the gas flows through the inner apertures 154 and is deflected by the louvres 158 in one direction, and substantially half the gas flows through the outer apertures 156 and is deflected by the louvres 158 in the opposite direction. The net result is a gas stream that leaves the baffle 150 with substantially no overall swirl.

Figure 5 shows a different baffle that may be used as a turbulence inducing means in a gas treatment apparatus according to the invention. Features of this embodiment that are similar to those of the previous embodiment 150 in Figure 4 will be referenced by similar numerals incremented by 200. Arrows 160 show the direction of the gas flow after passing through the baffle 350.

The baffle 350 includes apertures 72 including louvres which are arranged in two substantially concentric rings 254,256 and the orientation of the louvres in the inner ring 254 and outer ring 256 is such that the apertures cause a gas passing through them to move radially outward as well as circumferentially. The louvres of the inner ring cause the gas to gain a circumferential component to the flow in one direction and the louvres of the outer ring cause the gas to gain a circumferential component to the flow in an opposite direction, as in the baffle of Figure 5. This baffle therefore aids radial mixing by causing the gas to move radially and also creates turbulence as in the baffle of Figure 4.

The invention described herein aids in the efficient mixing of the reducing agent with the gas flow and thereby helps to reduce the overall size of such gas treatment apparatus. This size reduction is particularly useful where space limitations and emission controls are becoming more important, for instance on vehicles.

## Claims

1. Gas treatment apparatus (1) for treating an exhaust gas stream, said apparatus comprising a plurality of compartments (7,9) containing treatment elements (8,20,22,24) within which one or more treatments are to be performed on a gas stream passing through said compartments (7,9) and through which the gas stream is to flow sequentially, including and in order:
a) a compartment (7) containing a first treatment element (8);
b) a mixing region (12) including addition means for adding a reducing agent (16) to the gas stream, the mixing region (12) also including turbulence inducing means (18) to induce turbulence within the gas stream; and
c) at least one further compartment (9) containing a treatment element for a catalytic treatment (20, 22, 24);
**characterised in that** the turbulence inducing means (18) within the mixing region including angled surfaces (154, 156) that cause at least some of the gas to flow circumferentially in one direction (60) and at least some of the gas to flow circumferentially in an opposite (60) direction such that contra-rotating gas flows are formed.

2. Gas treatment apparatus as claimed in claim 1, in which the turbulence inducing means (18) comprise one or more baffles (150) including apertures (154, 156) such that gas may pass through the apertures.

3. Gas treatment apparatus as claimed in claim 2 in which at least one baffle (150) includes louvers (158) that deflect the gas flow passing through the apertures (154, 156) in a circumferential direction.

4. Gas treatment apparatus as claimed in any preceding claim in which the turbulence inducing means within the mixing region (12) comprises only one baffle (150).

5. Gas treatment apparatus as claimed in any of claims 2,3 or 4, in which at least one baffle (150) includes apertures (154, 156) and louvres (158), the louvres (158) arranged such that at least some of the gas is directed circumferentially in one direction (60) and at least some of the gas is directed circumferentially in the opposite direction (60).

6. Gas treatment apparatus as claimed in any preceding claim, in which the reducing agent is added to the flow through an injector (14) having a plurality of radially directed nozzles.

7. Gas treatment apparatus as claimed in claim 6, in which the turbulence inducing means (18) comprises a baffle (150) including a plurality of apertures (154, 156), the number of apertures (154, 156) in the baffle (150) not being wholly divisible by the number of nozzles in the injector (14).

8. A gas treatment apparatus as claimed in any preceding claim, in which the proportion of the gas flow caused to flow circumferentially in one direction (60) is substantially equal to the proportion of gas caused to flow in the opposite direction (60).

9. A gas treatment apparatus as claimed in any preceding claim, in which the first treatment element (8) is a treatment element for performing a catalytic oxidation.

10. A vehicle including a gas treatment apparatus, the gas treatment apparatus (1) being as claimed in any preceding claim.

## Patentansprüche

1. Gasbehandlungsvorrichtung (1) zur Behandlung einer Abgasströmung, bei der die Vorrichtung mehrere Kammern (7, 9) mit darin enthaltenen Behandlungselementen (8, 20, 22, 24) umfasst, in denen eine durch die Kammern (7, 9) geleitete Gasströmung einer oder mehreren Behandlungen unterzogen wird und die aufeinanderfolgend von der Gasströmung durchströmt werden, wobei die Vorrichtung der Reihe nach folgendes beinhaltet:
a) eine Kammer (7), die ein erstes Behandlungselement (8) enthält;
b) einen Mischbereich (12) mit Zugabemitteln, um der Gasströmung ein Reduktionsmittel (16) zuzugeben, wobei der Mischbereich (12) auch turbulenzinduzierende Mittel (18) beinhaltet, um innerhalb der Gasströmung eine Turbulenz zu induzieren; und
c) mindestens eine weitere Kammer (9), die ein Behandlungselement für eine katalytische Behandlung (20, 22, 24) enthält,
**dadurch gekennzeichnet, dass** die turbulenzinduzierenden Mittel (18) innerhalb des Mischbereichs angewinkelte Oberflächen (154, 156) beinhalten, die bewirken, dass mindestens ein Teil des Gases peripher in einer Richtung (60) strömt und mindestens ein Teil des Gases peripher in einer entgegengesetzten Richtung (60) strömt, so dass gegenrotierende Gasströmungen gebildet werden.

2. Gasbehandlungsvorrichtung nach Anspruch 1, bei der die turbulenzinduzierenden Mittel (18) ein oder mehrere Prallbleche (150) mit Öffnungen (154, 156) umfassen, so dass Gas durch die Öffnungen strömen kann.

3. Gasbehandlungsvorrichtung nach Anspruch 2, bei der mindestens ein Prallblech (150) Jalousien (158) beinhaltet, die die durch die Öffnungen (154, 156) strömende Gasströmung in einer peripheren Richtung ablenken.

4. Gasbehandlungsvorrichtung nach einem der vorstehend aufgeführten Ansprüche, bei der das turbulenzinduzierende Mittel innerhalb des Mischbereichs (12) nur ein Prallblech (150) umfasst.

5. Gasbehandlungsvorrichtung nach einem der Ansprüche 2, 3 oder 4, bei der mindestens ein Prallblech (150) Öffnungen (154, 156) und Jalousien (158) beinhaltet, wobei die Jalousien (158) so angeordnet sind, dass mindestens ein Teil des Gases peripher in einer Richtung (60) geleitet wird und mindestens ein Teil des Gases peripher in der entgegengesetzten Richtung (60) geleitet wird.

6. Gasbehandlungsvorrichtung nach einem der vorstehend aufgeführten Ansprüche, bei der das Reduktionsmittel durch einen mit mehreren radial ausgerichteten Düsen ausgestatteten Injektor (14) der Strömung zugegeben wird.

7. Gasbehandlungsvorrichtung nach Anspruch 6, bei der das turbulenzinduzierende Mittel (18) ein Prallblech (150) mit mehreren Öffnungen (154, 156) umfasst, wobei die Zahl der Öffnungen (154, 156) im Prallblech (150) nicht ohne Rest durch die Zahl der Düsen im Injektor (14) teilbar ist.

8. Gasbehandlungsvorrichtung nach einem der vorstehend aufgeführten Ansprüche, bei der die Teilmenge der peripher in einer Richtung (60) umgelenkten Gasströmung im Wesentlichen der Teilmenge der in der entgegengesetzten Richtung (60) umgelenkten Gasströmung entspricht.

9. Gasbehandlungsvorrichtung nach einem der vorstehend aufgeführten Ansprüche, bei der es sich bei dem ersten Behandlungselement (8) um ein Behandlungselement zur Durchführung einer katalytischen Oxidation handelt.

10. Fahrzeug mit einer Gasbehandlungsvorrichtung, wobei die Gasbehandlungsvorrichtung (1) einem der vorstehend aufgeführten Ansprüche entspricht.

## Revendications

1. Appareil de traitement du gaz (1) destiné à traiter un courant de gaz d'échappement, ledit appareil comprenant une pluralité de compartiments (7, 9) contenant des éléments de traitement (8, 20, 22, 24) à l'intérieur desquels un ou plusieurs traitement doivent être effectués sur un courant de gaz traversant lesdits compartiments (7, 9) et à travers lesquels le courant de gaz doit s'écouler de façon séquentielle, y compris et dans l'ordre :
a) un compartiment (7) contenant un premier élément de traitement (8) ;
b) une zone de mélange (12) comprenant un moyen d'ajout servant à ajouter un réducteur (16) au courant de gaz, la zone de mélange (12) comprenant aussi des moyens de création d'une turbulence (18) destinés à induire une turbulence dans le courant de gaz ; et
c) au moins un autre compartiment (9) contenant un élément de traitement servant à un traitement catalytique (20, 22, 24) ;
**caractérisé en ce que** les moyens de création d'une turbulence (18) dans la zone de mélange comprennent des surfaces inclinées (154, 156) qui ont pour effet qu'au moins une partie du gaz s'écoule circonférentiellement dans une direction (60) et qu'au moins une partie du gaz s'écoule circonférentiellement dans une direction opposée (60) de manière à former des écoulements de gaz contrarotatifs.

2. Appareil de traitement de gaz selon la revendication 1, dans lequel les moyens de création d'une turbulence (18) comprennent une ou plusieurs chicanes (150) comprenant des ouvertures (154, 156) telles que le gaz puisse passer par les ouvertures.

3. Appareil de traitement de gaz selon la revendication 2, dans lequel au moins une chicane (150) comporte des volets (158) qui dévient le courant de gaz passant à travers les ouvertures (154, 156) dans une direction circonférentielle.

4. Appareil de traitement de gaz selon l'une quelconque des revendications précédentes dans lequel le moyen de création d'une turbulence dans la zone de mélange (12) ne comprend qu'une seul chicane (150).

5. Appareil de traitement de gaz selon l'une quelconque des revendications 2, 3 ou 4, dans lequel au moins une chicane (150) comprend des ouvertures (154, 156) et des volets (158), les volets (158) étant disposés de telle façon qu'au moins une partie du gaz est dirigée circonférentiellement dans une direction (60) et qu'au moins une partie du gaz est dirigée circonférentiellement dans la direction opposée (60).

6. Appareil de traitement de gaz selon l'une quelconque des revendications précédentes, dans lequel le réducteur est ajouté au courant à travers un injecteur (14) comportant une pluralité de buses dirigées radialement.

7. Appareil de traitement de gaz selon la revendication 6, dans lequel le moyen de création d'une turbulence (18) comprend une chicane (150) comportant une pluralité d'ouvertures (154, 156), le nombre d'ouvertures (154, 156) de la chicane (150) n'étant pas divisible exactement par le nombre de buses de l'injecteur (14).

8. Appareil de traitement de gaz selon l'une quelconque des revendications précédentes, dans lequel la proportion du courant de gaz qui est mise en circulation circonférentiellement dans une direction (60) est sensiblement égale à la proportion de gaz qui est mise en circulation dans la direction opposée (60).

9. Appareil de traitement de gaz selon l'une quelconque des revendications précédentes, dans lequel le premier élément de traitement (8) est un élément de traitement servant à effectuer une oxydation catalytique.

10. Véhicule comportant un appareil de traitement du gaz, l'appareil de traitement du gaz (1) étant comme revendiqué dans l'une quelconque des revendications précédentes.
